# EUROPEAN PATENT SPECIFICATION

(11) **EP 0 452 494 B1**
(45) Date of publication and mention of the grant of the patent: **01.05.1996**
(21) Application number: 90900362.6
(22) Date of filing: 25.12.1989
(51) Int. Cl.: H05H 1/34, B23K 10/00

(54) **TRANSFERRED PLASMA-ARC TORCH**
PLASMABRENNER FÜR ÜBERTRAGENEN LICHTBOGEN
CHALUMEAU A PLASMA A ARC TRANSFERE

(30) Priority: 26.12.1988 JP 325962/88
(43) Date of publication of application: 23.10.1991
(73) Proprietor: KABUSHIKI KAISHA KOMATSU SEISAKUSHO, Tokyo 107 (JP)
(72) Inventor: SAKURAGI, Shun-ich Technical Institute of, Hiratsuka-shi Kanagawa-ken 254 (JP)
(74) Representative: TER MEER - MÜLLER - STEINMEISTER & PARTNER
(86) International application number: PCT/JP89/01300
(87) International publication number: WO 90/07395

(56) References cited:
- FR-A- 1 207 809
- JP-A- 5 252 845
- JP-A-62 240 171
- JP-Y- 5 750 146
- US-A- 2 898 441
- US-A- 3 349 215
- US-A- 3 521 023
- US-A- 4 564 740

## Description

The present invention relates to a transferred plasma arc torch according to the preamble of the independent claims 1 to 4.

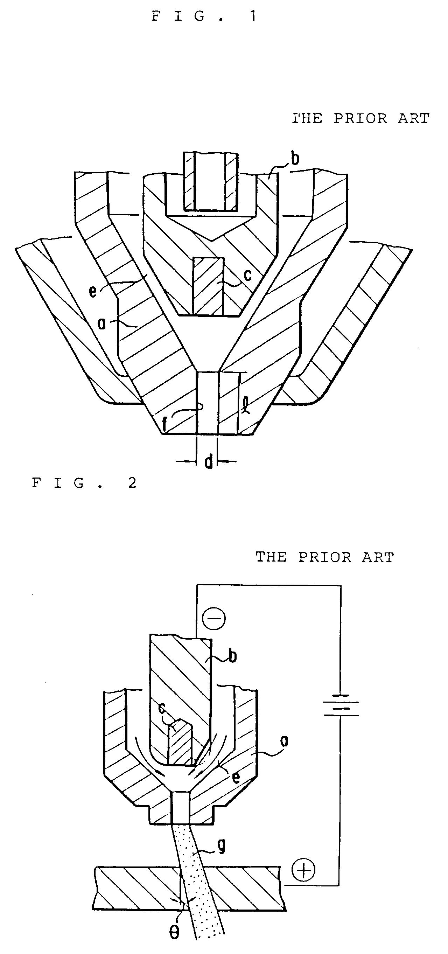

One transferred plasma arc torch according to the prior art is shown in Fig. 1 (a paper of Hypertherm Inc., NH, U.S.A., having the title "A History of Plasma Cutting"). This transferred plasma arc torch of the prior art has its torch a tapered at its portion facing an electrode c which is held by an electrode holder b. The working gases in the torch are guided to pass through a working gas passage e, which is in the shortest gap around the electrode holder b, and are then accelerated in the nozzle a having a gradually reduced effective area, until they reach the throat f of the nozzle a, which has a diameter d and a length 1. From this throat f, the gases are discharged to the outside at a velocity equal to their sonic velocity.

In the case of the transferred plasma arc torch of a metal plate using the aforementioned nozzle a of the prior art, the cut face is highly frequently inclined from the start of the cutting even if the nozzle a used is new.

According to our investigations, it has been found that the major causes for the aforementioned phenomena are, as follows:

Due to a minute displacement between the center lines of the electrode c and the nozzle a, the gap between the electrode c and the nozzle a becomes uneven so that the flow velocity of the working gases passing the working gas passage e in that gap becomes asymmetrical with respect to the center line of the nozzle a to establish serious velocity differences. The working gases having such asymmetrical velocity distribution will establish disturbances such as vortexes when they flow into the mixing chamber located downstream of the electrode c. These disturbances are not damped but released as they are to the outside because they are abruptly accelerated to the exit of the nozzle a having the gradually reduced effect area.

As a result, the velocity distribution remains asymmetrical with respect to the center line of the nozzle a even at the throat f of the nozzle a so that the directivity of the arc jet discharged to the atmosphere is deteriorated to induce a deflection of the arc jet.

In order to examine these phenomena experimentally, we have observed the behavior of the arc jet g to be discharged from the nozzle a, by grinding out a portion of the tip of the electrode holder b of the commercially available air plasma arc torch of 50A grade to enlarge the difference in the working gas velocity which is established by the working gas passage e in the gap between the nozzle a and the electrode holder b.

These experiments have been performed for several electrode holders and have confirmed that the direction of deflection of the arc jet g and the direction of the ground-out portion of the electrode holder b are aligned.

This means that the asymmetry, if any, of the gap to be formed between the nozzle a and the electrode holder b due to the offset of the axes will induce the deflection of the arc jet g thereby to cause an inclination of an angle θ at the cut face.

The aforementioned inclination of the cut face grows a serious problem in case the thickness of the plate to be cut is enlarged. In the case of cutting a thick plate, a secondary working may be required, or still the worse the cut work cannot be used as the product, if the angle of inclination of the cut face exceeds some extent.

In order to prevent occurrence of the aforementioned inclination of the cut face, it has been endeavored to raise the working accuracy of a component such as the arc body, the electrode holder or the nozzle. Despite of this endeavor, however, a complete solution has not been obtained yet due to the practical limits in the working accuracy and the assembling accuracy.

The present invention has been conceived in view of the background thus far described and has an object to provide a transferred plasma arc torch capable of obtaining an excellent cut face having a small angle of inclination even in the case of cutting a thick plate.

To comply with the object of the invention, the plasma arc torch according to the invention is characterized by the features of one of claims 1 to 4.

According to one embodiment of the present invention, moreover, there is provided a transferred plasma arc torch comprising a swirler disposed upstream of the working gas passage inside of said nozzle for generating a swirling flow.

According to the transferred plasma arc torch of the aforementioned individual modes of the present invention, the working gases flow in the form of the swirling flow into the working gas passage and are accelerated downstream in the nozzle until they are discharged from the throat of the nozzle. Even if, at this time, the aforementioned working gas flow is disturbed due to the displacement of the axes of the electrode holder and the nozzle, it is damped by the viscosity of the working gases, while it passes through the chamber disposed in the nozzle to face the electrode, until it is released with an even velocity distribution at the nozzle throat.

Thus, it is possible to obtain an excellent cut product having a cut face of small angle of inclination.

The aforementioned and other objects, modes and advantages of the present invention will become apparent to those skilled in the relevant art, from the following description to be made in connection with preferred embodiments of the present invention with reference to the accompanying drawings.

### Brief Description of the Drawings

Fig. 1 is a section showing an essential portion of the example of the prior art;
Fig. 2 is an explanatory view for explaining the used state in case the tip of the electrode holder of the example of the prior art is partially removed;
Fig. 3 is a section showing an essential portion of a specific embodiment of the present invention;
Fig. 4 is a section taken along line II - II of Fig. 3;
Figs. 5, 6 and 7 are sections showing essential portions of other specific embodiments of the present invention, respectively;
Fig. 8 is a section showing the tip of a transferred plasma arc torch as one specific embodiment of the present invention; and
Figs. 9A and 9B are diagrams showing and comparing the agings of the bevel angles of the example of the prior art and the specific embodiment of the present invention, respectively.

### Detailed Description of the Preferred Embodiments

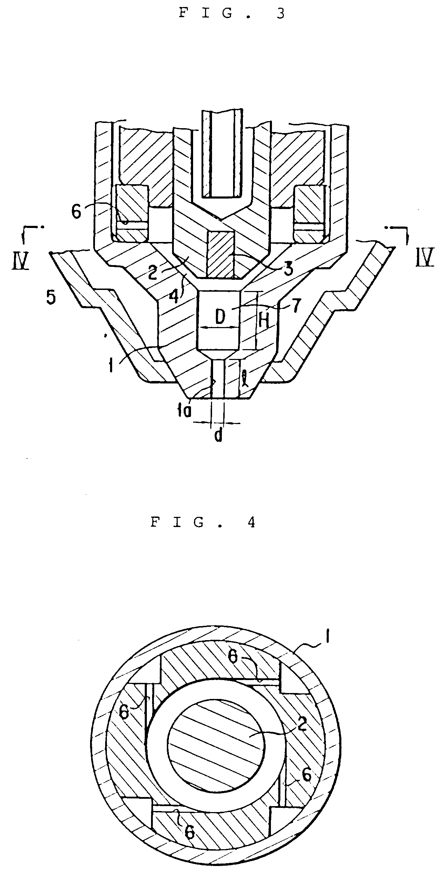

Several specific embodiments of the present invention will be described with reference to Figs. 3 to 9B.

Fig. 8 shows the overall structure of the transferred plasma arc torch according to the present invention. Designated at reference numeral 2 is a cylindrical electrode having a tip 3. Moreover, this tip of the electrode 2 is enclosed at a gap by a nozzle 1 to form this gap at the inside of the nozzle 1 into a tapered working gas passage 4. On the other hand, the inside of the aforementioned electrode 2 and the outside of the nozzle 1 are made to communicate with each other through a cooling water passage 5.

In the essential portion of the aforementioned transferred plasma arc torch, as shown in Figs. 3 and 4, there is disposed in the working gas passage 4 outside of the electrode 2 a swirler 6 for swirling the working gases generally tangentially up to the tip of the electrode 2.

The nozzle 1 has its tip formed with a throat la having a diameter d and a length 1. Inside of this throat 1a, there is formed a generally cylindrical chamber 7 which has an internal diameter D and an axial length H and which is positioned to face the tip of the electrode 3. The internal diameter D of the space 7 is several times as large as the diameter d of the throat 1a.

With the structure thus far described, the working gases flowing into the nozzle 1 are swirled by the swirler 6 so that the swirling flow moves downstream of the nozzle 1. In this case, the working gases have only the swirling velocity component at first, but their velocity is accelerated the more as the effective area of the passage becomes the smaller, until it takes the maximum at the position facing the tip of the electrode 3. After this, the working gases pass through the chamber 7 of the nozzle 1 until they are discharged from the throat 1a.

In this instance, the axial velocity component of the working gases passing through the chamber 7 is maintained at a small level over the distance H of the chamber 7 and is then accelerated to the sonic level at the throat 1a. Since, in the chamber 7, the swirling velocity component is retained at the high level, there arises no problem in holding the arc stably.

In the aforementioned operations, the working gases are subjected to a velocity difference while they are passing through their passage 4 or the gap between the nozzle 1 and the electrode 2, in case the center lines of the two members 1 and 2 are finely offset. As a result, disturbances are established in the space downstream of the lower end face of the electrode due to the asymmetrical velocity distributions relative to the center line of the nozzle.

However, those disturbances of the working gases are damped by the viscosity of the fluid because of the low velocity of the gases, while they are moving downstream at the low axial velocity component within the chamber 7, until the working gases restore the velocity distribution, which is generally symmetric with respect to the nozzle center axis, in the vicinity of the entrance of the throat 1a.

In order to exhibit the aforementioned damping effect of the disturbances due to the viscosity, it is necessary to reduce the axial velocity component of the working gases to a sufficiently small level and to retain a sufficient axial length H of the chamber 7 for damping the aforementioned disturbances completely.

It is, therefore, important to select the aforementioned sizes D and H properly.

According to our examinations, it has been found that the effects of the present invention can be prominently exhibited under a wide variety of running conditions if the sizes D and H are determined to satisfy the following relations for the diameter d of the throat 1a:$\text{1.5 ≦ D/d ≦ 10;}$ and$\text{0.75 ≦ H/D ≦ 5.}$

Figs. 5 to 7 show the individual essential portions of other specific embodiments of the present invention, respectively. In the embodiment shown in Fig. 5, a chamber 7a has a shape of a frustum of cone, as expressed by D₁ > D₂. In this embodiment, too, the prominent effects can be attained if the following relations are satisfied:${\text{1.5 ≦ D}}_{\text{2}} \text{/ d ≦ 10;}$ and${\text{0.75 ≦ H/ D}}_{\text{2}} \text{≦ 5.}$

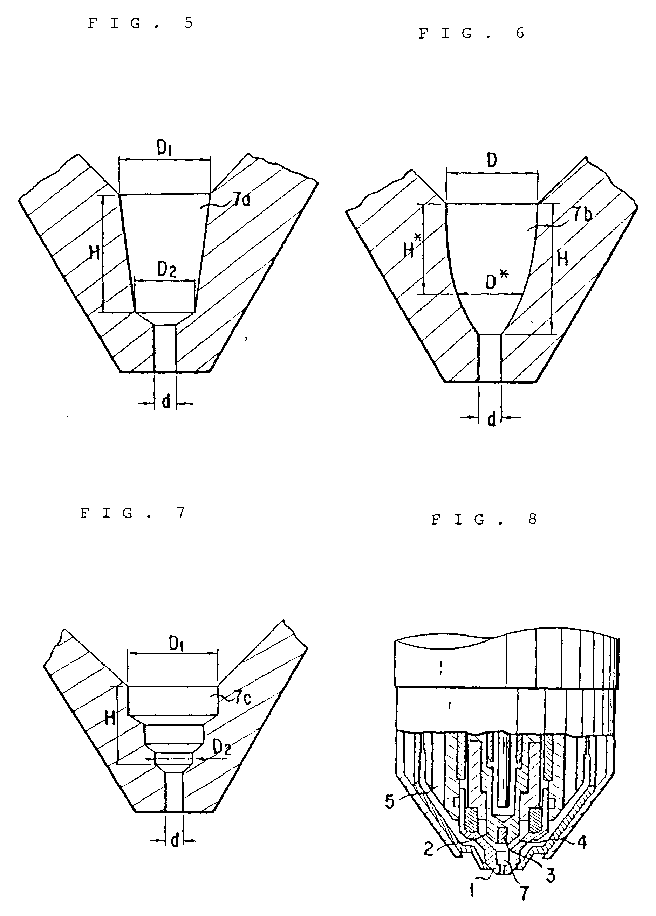

In the embodiment shown in Fig. 6, on the other hand, a chamber 7b has a warhead shape having an outer circumference formed of a smooth curve. In this embodiment, too, the prominent effects can be attained If the following relations are satisfied:$\text{1.5 ≦ D*/ d ≦ 10;}$ and$\text{0.75 ≦ H*/ D* ≦ 5.}$

In the embodiment shown in Fig. 7, moreover, a chamber 7c is formed to have a multiplicity of steps of cylinders having their diameters reduced gradually to the outside. In this embodiment, too, the prominent effects can be attained if the following relations are satisfied:${\text{1.5 ≦ D}}_{\text{2}} \text{/ d ≦ 10;}$ and${\text{0.75 ≦ H/ D}}_{\text{1}} \text{≦ 5.}$

Here will be presented the results of comparing the example of the prior art and the specific embodiment of the present invention, as shown in Fig. 3, by comparing their operational effects:
· Example of the Prior Art:
   d = 0.4 mm, and l = 1.4 mm;
· Embodiment of the Invention:
   d = 0.4 mm, l = 1.4 mm,
   D = 2 mm, and H = 3 mm; and
· Operating Current - - - - - 12 A,
   Plasma Gases - - - - - - - Oxygen Gases,
   Working Gas Pressure - - - 5.5˙ Kg/cm,
   Plate to Be Cut - - - - - - SPC, and
   Plate Thickness - - - - - - 1.6 mm.

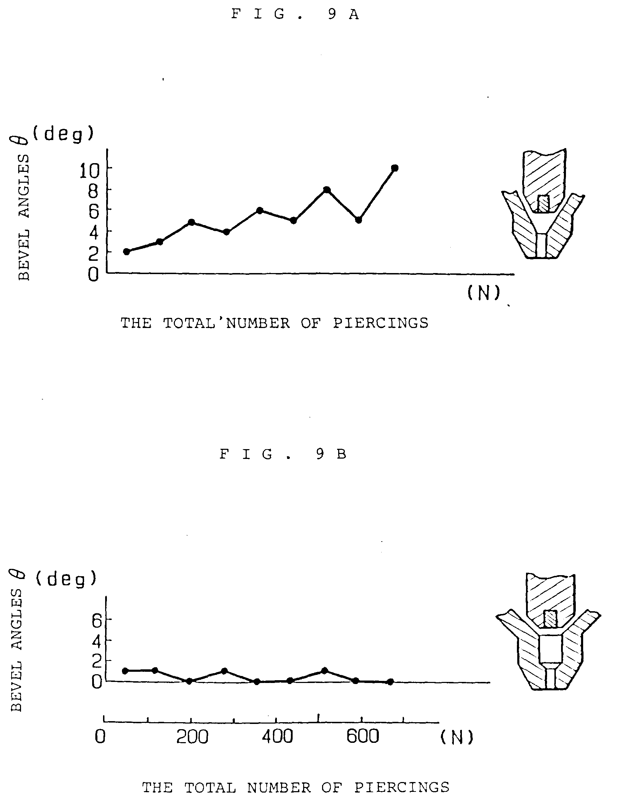

The bevel angles θ (i.e., the angles of inclination) of the above-specified two examples are plotted in Figs. 9A and 9B. It could be found that the cutting quality of the embodiment of the present invention, as shown in Fig. 9B, is better to have a smaller inclination of cut face than that of the example of the prior art, as shown in Fig. 9A, even after a long use. Moreover, another accompanying phenomenon is that the quantity of the dross to be attached to the lower end of the cut face is drastically reduced.

Incidentally, the measurements of the aforementioned angles θ of inclination of the cut face were periodically repeated after a predetermined number of piercing.

## Claims

1. A transferred plasma arc torch of the type, in which the tip (3) of an electrode (2) is enclosed by a nozzle (1), which forms a tapered working gas passage (4) together with said electrode and has a throat formed in its tip , characterized: in that said nozzle (1) has a chamber (7) of a generally cyndrical shape between the throat and the tip of the electrode; and in that the following relations are satisfied if the throat diameter of said nozzle is designated at d and if the diameter and axial length of said chamber (7) are designated at D and H, respectively:$\text{1.5 ≦ D/d ≦ 10;}$ and$\text{0.75 ≦ H/ D ≦ 5.}$

2. A transferred plasma arc torch of the type in which the tip (3) of an electrode (2) is enclosed by a nozzle (1), which forms a tapered working gas passage (4) together with said electrode, and has a throat formed in its tip, characterized in that said nozzle (1) has a chamber (7a) of a generally frusto-conical shape between the throat and the tip of the electrode and in that the following relations are satisfied if the throat diameter of the nozzle (1) is designated as d and the diameters and the axial length of the chamber (7a) are designated as D1 > D2 and H$\text{1.5 ≤ D2/d ≤ 10;}$ and$\text{0.75 ≤ H/D2 ≤ 5.}$

3. A transferred plasma arc torch of the type in which the tip of an electrode (2) is enclosed by a nozzle (1), which forms a tapered working gas passage (4) together with said electrode and has a throat formed in its tip, **characterized** in that said nozzle (1) has between the throat and the tip of the electrode a chamber (7b) of a warhead shape having an outer circumference formed of a smooth curve , and in that the warhead shape is such that the following relations are satisfied with respect to D* and H* if the throat diameter of said nozzle is designated as d and if D* is the diameter of the chamber (7b) at a height H* measured from the upper end of the chamber (7b)$\text{1.5 ≤ D*/d ≤ 10;}$ and$\text{0.75 ≤ H*/D* ≤ 5.}$

4. A transferred plasma arc torch of the type in which the tip of an electrode (2) is enclosed by a nozzle (1), which forms a tapered working gas passage (4) together with said electrode and has a throat formed in its tip **characterized** in that said nozzle (1) has between the throat and the tip of the electrode a chamber (7c) of a shape of a multiplicity of cylindrical stages having their diameters reduced gradually towards the outside and in that the following relations are satisfied if the throat diameter of the nozzle (1) is designated as d and if the diameter of the largest cylindrical stage is D1, the diameter of the smallest cylindrical stage D2 and the height of the chamber (7) is H$\text{1.5 ≤ D2/d ≤ 10;}$ and$\text{0.75 ≤ H/D1 ≤ 5.}$

5. A plasma arc torch as claimed in one of claims 1 to 4, characterized by a swirler (6) disposed upstream of the working gas passage (4) inside of said nozzle (1) for generating a swirl flow.

## Patentansprüche

1. Plasmabrenner mit übertragenem Lichtbogen von dem Typ, bei dem die Spitze (3) einer Elektrode (2) durch eine Düse (1) umgeben ist, die einen schräg zusammenlaufenden Arbeitsgaskanal (4) zusammen mit der Elektrode bildet und an ihrer Spitze eine Engstelle aufweist, dadurch **gekennzeichnet**, daß die Düse (1) eine Kammer (7) mit im allgemeinen zylindrischer Form zwischen der Engstelle und der Spitze der Elektrode bildet und daß die folgende Beziehung besteht, wenn der Engstellendurchmesser der Düse mit d und der Durchmesser und die axiale Länge der Kammer (7) mit D und H bezeichnet werden:$\text{1,5 ≤ D/d ≤ 10;}$ und$\text{0,75 ≤ H/D ≤ 5.}$

2. Plasmabrenner mit übertragenem Lichtbogen von dem Typ, bei dem die Spitze (3) einer Elektrode (2) durch eine Düse (1) umgeben ist, die einen schräg zusammenlaufenden Arbeitsgaskanal (4) zusammen mit der Elektrode bildet und an ihrer Spitze eine Engstelle aufweist, dadurch **gekennzeichnet**, daß die Düse (1) eine Kammer (7a) mit allgemein kegelstumpfförmiger Form zwischen der Engstelle und der Spitze der Elektrode bildet und daß die folgende Beziehungen bestehen, wenn der Engstellendurchmesser der Düse (1) mit d und der Durchmesser und die axiale Länge der Kammer (7a) mit D1 > D2 und H bezeichnet werden:$\text{1,5 ≤ D2/d ≤ 10;}$ und$\text{0,75 ≤ H/D2 ≤ 5}$

3. Plasmabrenner mit übertragenem Lichtbogen von dem Typ, bei dem die Spitze (3) einer Elektrode (2) durch eine Düse (1) umgeben ist, die einen schräg zusammenlaufenden Arbeitsgaskanal (4) zusammen mit der Elektrode bildet und an ihrer Spitze eine Engstelle aufweist, dadurch **gekennzeichnet**, daß die Düse (1) zwischen der Engstelle und der Spitze der Elektrode eine Kammer (7b) mit helmartiger Form bildet, die einen äußeren Umfang aufweist, der aus einer glatten Kurve innerhalb der Engstelle in der Spitze der Düse (1) gegenüber der Elektrode besteht und daß die Helmform derart ist, daß die folgenden Beziehungen bestehen in bezug auf D* und H*, wenn der Engstellendurchmesser der Düse mit d bezeichnet wird und D* den Durchmesser der Kammer (7b) und H* deren Höhe, gemessen vom oberen Ende der Kammer (7b), bezeichnet,$\text{1,5 ≤ D*/d ≤ 10;}$ und$\text{0,75 ≤ H*/D* ≤ 5.}$

4. Plasmabrenner mit übertragenem Lichtbogen von dem Typ, bei dem die Spitze (3) einer Elektrode (2) durch eine Düse (1) umgeben ist, die einen schräg zusammenlaufenden Arbeitsgaskanal (4) zusammen mit der Elektrode bildet und an ihrer Spitze eine Engstelle aufweist, dadurch **gekennzeichnet**, daß die Düse (1) zwischen der Engstelle und der Spitze der Elektrode eine Kammer (7c) in der Form einer Anzahl von zylindrischen Stufen bildet, deren Durchmesser nach und nach in Richtung der Außenseite der Engstelle in der Spitze der Düse (1) gegenüber der Elektrode abnimmt, und daß die folgenden Beziehungen bestehen, wenn der Durchmesser der Engstelle der Düse (1) mit d, der Durchmesser der größten zylindrischen Stufe mit D1, der Durchmesser der kleinsten zylindrischen Stufe mit D2 und die Höhe der Kammer (7) mit H bezeichnet wird,$\text{1,5 ≤ D2/d ≤ 10;}$ und$\text{0,75 ≤ H/D1 ≤ 5.}$

5. Plasmabrenner nach einem der Ansprüche 1 bis 4, **gekennzeichnet** durch ein Rührorgan (6) stromaufwärts des Arbeitsgaskanals (4) innerhalb der Düse (1) zur Erzeugung einer Wirbelströmung.

## Revendications

1. Chalumeau à plasma à arc transféré du type dans lequel la pointe (3) d'une électrode (2) est entourée par une buse (1) qui forme un passage de gaz de travail convergent (4) conjointement avec ladite électrode et a une gorge formée à sa pointe, caractérisé en ce que ladite buse (1) a une chambre (7) de forme générale cylindrique entre la gorge et la pointe de l'électrode, et en ce que les relations suivantes sont satisfaites si le diamètre de la gorge de ladite buse est désigné par d et le diamètre et la longueur axiale de ladite chambre (7) par D et H, respectivement :$\text{1,5 ≤ D/d ≤ 10;}$ et$\text{0,75 < H/D < 5.}$

2. Chalumeau à plasma à arc transféré du type dans lequel la pointe (3) d'une électrode (2) est entourée par une buse (1) qui forme un passage de gaz de travail convergent (4) conjointement avec ladite électrode et a une gorge formée à sa pointe, caractérisé en ce que ladite buse (1) a une chambre (7a) de forme générale tronconique entre la gorge et la pointe de l'électrode et en ce que les relations suivantes sont satisfaites si le diamètre de la gorge de la buse (1) est désigné par d et le diamètre et la longueur axiale de la chambre (7a) par D₁ > D₂ et H :${\text{1,5 ≤ D}}_{\text{2}} \text{/d ≤ 10;}$ et${\text{0,75 ≤ H/D}}_{\text{2}} \text{≤ 5.}$

3. Chalumeau à plasma à arc transféré de type dans lequel la pointe d'une électrode (2) est entourée par une buse (1) qui forme un passage à gaz de travail convergent (4) conjointement avec ladite électrode et a une gorge formée dans sa pointe, caractérisé en ce que ladite buse (1) a entre la gorge et la pointe de l'électrode une chambre (7b) en forme d'ogive avec une circonférence externe formée d'une courbe uniforme et en ce que la forme en ogive est telle que les relations suivantes soient satisfaites par rapport à D* et H* si le diamètre de la gorge de ladite buse est désignée par d et si D* est le diamètre de la chambre (7b) à une hauteur H* mesurée à partir de l'extrémité supérieure de la chambre (7b) :$\text{1,5 ≤ D*/d ≤ 10;}$ et$\text{0,75 ≤ H*/D* ≤ 5.}$

4. Chalumeau à plasma à arc transféré du type dans lequel la pointe d'une électrode (2) est entourée par une buse (1) qui forme un passage à gaz de travail convergent (4) conjointement avec ladite électrode et a une gorge formée dans sa pointe, caractérisé en ce que ladite buse (1) a, entre la gorge et la pointe de l'électrode, une chambre (7c) d'une forme en étages cylindriques dont le diamètre se réduit graduellement vers l'extérieur et en ce que les relations suivantes sont satisfaites si le diamètre de la gorge de la buse (1) est désignée par d et si le diamètre de l'étage cylindrique le plus grand est D₁, le diamètre de l'étage cylindrique le plus petit D₂ et la hauteur de la chambre (7) est H :${\text{1,5 ≤ D}}_{\text{2}} \text{/d ≤ 10;}$ et${\text{0,75 ≤ H/D}}_{\text{1}} \text{≤ 5.}$

5. Chalumeau à plasma à arc selon l'une quelconque des revendications 1 à 4, caractérisé par un système tourbillonnant (6) disposé en amont du passage de gaz de travail (4) à l'intérieur de ladite buse (1) pour générer un flux tourbillonnant.
